# EUROPEAN PATENT SPECIFICATION

(11) **EP 0 372 090 B1**
(45) Date of publication and mention of the grant of the patent: **30.03.1994**
(21) Application number: 89907262.3
(22) Date of filing: 07.06.1989
(51) Int. Cl.: B29D 30/68, B23C 3/28

(54) **TIRE GROOVING APPARATUS**
VORRICHTUNG ZUM HERSTELLEN VON RIEFEN IN REIFEN
INSTALLATION DE SCULPTAGE DE PNEUS

(30) Priority: 10.06.1988 JP 143903/88
(43) Date of publication of application: 13.06.1990
(73) Proprietor: SUMITOMO RUBBER INDUSTRIES LIMITED, Chuo-ku Kobe-shi Hyogo 651 (JP)
(72) Inventor: KINUHATA, Satoru, Kobe-shi Hyogo 658 (JP); YAMADA, Seiki, Ibaraki-shi Osaka 567 (JP); TAKAMI, Masao, Kobe-shi Hyogo 651-11 (JP); SHIBATA, Eiji, Nakama-shi Fukuoka 809 (JP); TAMURA, Tadahiko, Kitakyushu-shi Fukuoka 806 (JP)
(74) Representative: Stewart, Charles Geoffrey
(86) International application number: PCT/JP89/00583
(87) International publication number: WO 89/11967

(56) References cited:
- EP-A- 0 190 914
- FR-A- 2 403 183
- JP-A- 4 855 486
- JP-A-61 177 232

## Description

The present invention relates to a tyre grooving apparatus, and more particularly relates to a tyre grooving apparatus in which a cutter support can be independently moved up and down, so as to cut tread grooves having various depth by means of a cutter of the required shape and size.

Conventionally, the work of grooving a tyre for trial and limited scale production, that is carving the tread pattern grooves in a plain cured tyre without any tread pattern, is generally carried out by a hand cutter, and this requires skill and a lot of time.

Taking the above-mentioned problems into consideration, the present applicant has already proposed a tyre grooving apparatus having, as its main constructional features a cutting device attached to a laterally movable carriage which is moved in parallel and perpendicular directions with reference to a tyre support shaft; a pivotable arm support shaft which extends from the carriage; a pivotable arm attached to the support shaft; a cutter holder which is pivotably attached to the pivotable arm perpendicularly to the axis thereof; and cutter which is held by the end portion of the cutter holder, so that cutting position of the cutter is arranged to be on the extended axis of the support shaft (Japanese Unexamined Patent Publications Nos. 54240/1988 and 177232/1986 and European Patent Publication EP-A-0190914).

French patent publication FR-A-2403183 discloses a tyre grooving apparatus providing a magnetic detector in conjunction with a groove cutting knife. In operation the magnetic detector responds to the metallic belt in the tyre crown and causes perpendicular movement of the cutting knife to prevent it from cutting into the tread rubber so deeply as to expose the metallic belt.

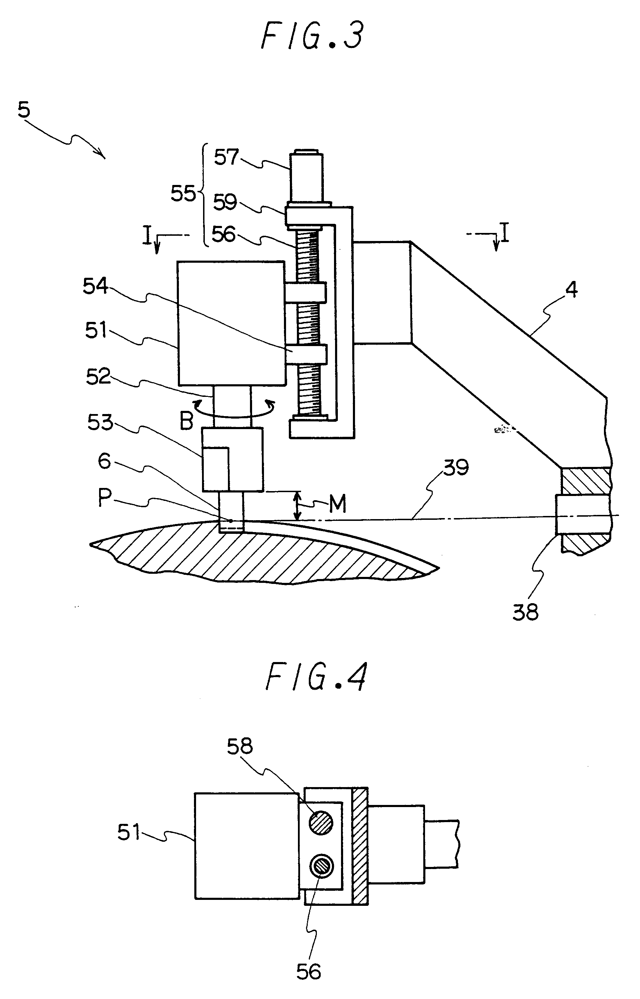

In the present specification, the cutting position of the cutter means a particular point of the cutter which is at a distance (M) (including zero) from the bottom end of the cutter holder (refer to Figure 3).

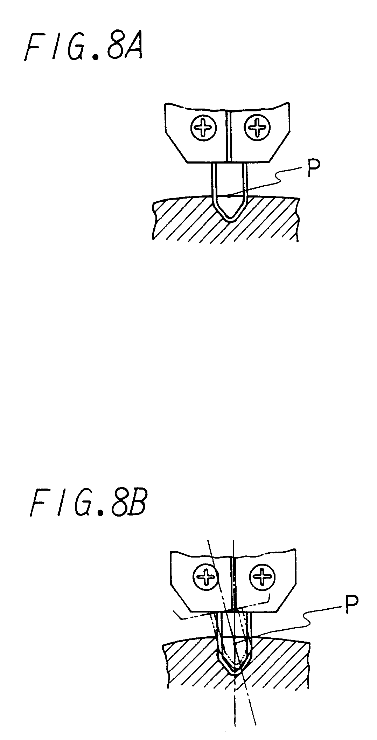

Carving tread pattern grooves in a plain tyre by a tyre grooving apparatus is carried out by setting the cutting position at the tangential line (Processing Standard Point for Tread) of a plain tyre. Thus, since the cutting position of the cutter is kept always on the extended axis of the pivotable arm support shaft, namely on the tangential line of the plain tyre calculation of the amount of movement of the movable carriage and the pivotable arm becomes simple, programming of the computer control programs becomes easy and accurate grooving becomes possible. However, when different depths of tread pattern grooves are to be carved by the tyre grooving apparatus, for example, to carve deeper grooves, it is necessary for the cutter to be changed for a cutter of longer effective length. On the other hand, when shallow depth grooves are to be carved, it is necessary for the cutter to be changed for a cutter of shorter effective length. This causes a problem in that the operation of the tyre grooving apparatus is no longer easy. Moreover, if different depths of tread pattern grooves are to be cut without changing the cutter, displacement occurs between the cutting position and the processing standard point for the tread (refer to Figure 8B). In such a condition, if a groove whose centre line is parallel to the centre vertical line of the tyre tread is carved as a zigzag on the tyre surface, the zigzag pitches of successive grooves become different from one another. When grooves whose vertical centre line is inclined to the central vertical line of the tyre tread are carved, it is not possible to maintain carving accuracy since the centre of the groove does not coincide with the processing standard point of the tread.

Accordingly, it is necessary to adjust the amount of movement of the cutter in accordance with the degree of difference between the cutting position of the cutter in use and the processing standard point of the tread. Therefore there is a problem and the control program for cutter movement becomes complicated.

It is an object of the present invention to solve the above-mentioned problems and to provide a tyre grooving apparatus wherein the cutter support unit is moved up and down independently, so as to carve grooves having various depth using a single cutter of the one shape and size.

Accordingly a tyre grooving apparatus of the present invention comprises a tyre support unit including a tyre support shaft adapted to rotatably support a tyre, a carriage, including means for moving said carriage parallel to the tyre support shaft, a block mounted on said carriage and means operatively connected to said block for moving the block in the vertical direction, a block shaft extending from and rotatably supported by said block, a pivotable arm member, pivotably supported at one end portion by said block shaft, and a cutter supported by a cutter support unit and disposed at the other end portion of the pivotable arm member, characterised by said cutter support unit including means for independently moving said cutter support unit in a direction perpendicular to the axis of said block shaft extending from said block to position said cutter coincident with the axis of said block shaft.

In the tyre grooving apparatus of the present invention, since the cutter support unit which is movable up and down independently is attached to the free end portion of the pivotable arm, the depth of a tread pattern groove can be adjusted and the cutting position of the cutter set arbitrarily without moving the block vertically and without changing cutters and without the need for a program to correct the amount of movement of the cutter.

The invention will now be described with the attached drawings, in which:
Figure 1 is a side view of a tyre grooving apparatus of one embodiment of the present invention; Figure 2 is a front view of the tyre grooving apparatus shown in Figure 1;
Figure 3 is a partially enlarged view of the cutter support unit of the grooving apparatus shown in Figure 1;
Figure 4 is a sectional view taken along the line I-I of Figure 3;
Figure 5 is a part sectional view of the cutter support unit for the grooving apparatus of another embodiment of the present invention;

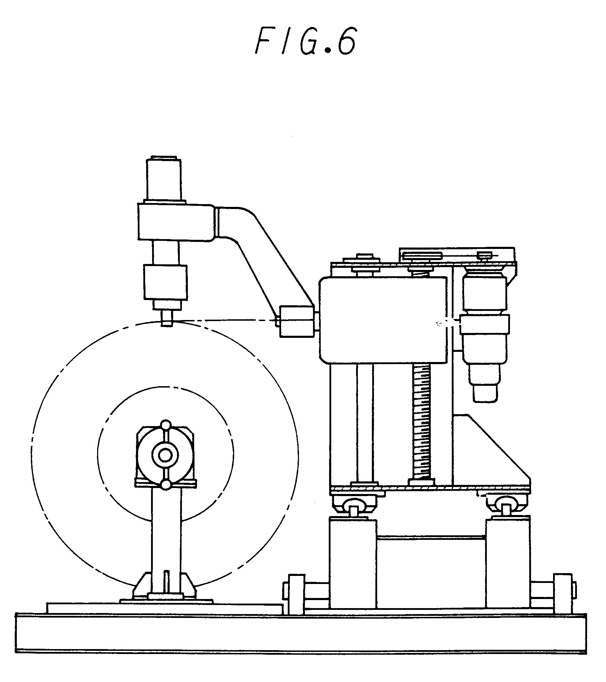

Figure 6 is a side view of a conventional tyre grooving apparatus;

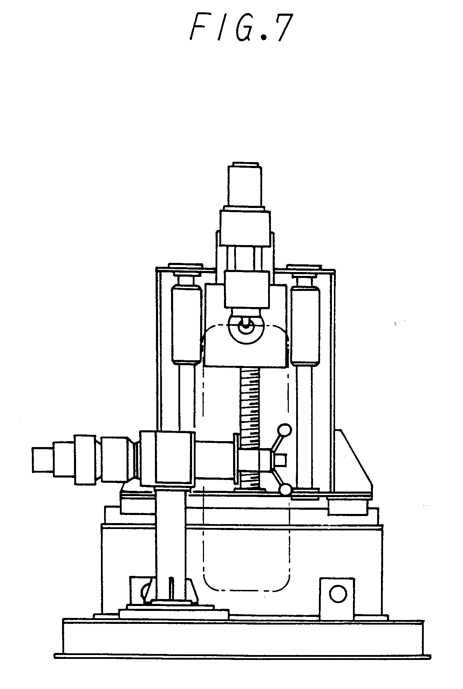

Figure 7 is a front view of the grooving apparatus shown in Figure 6;
Figures 8A and 8B are explanatory illustrations of the cutter position for carving.

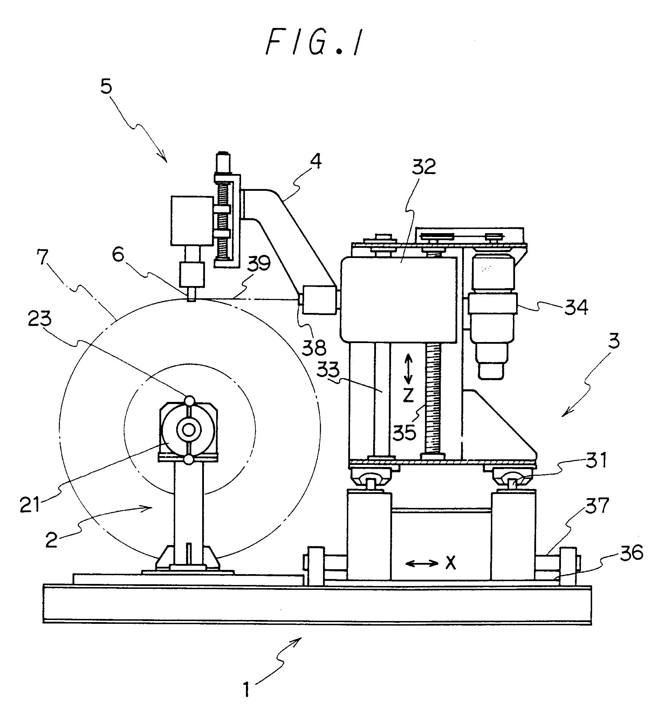

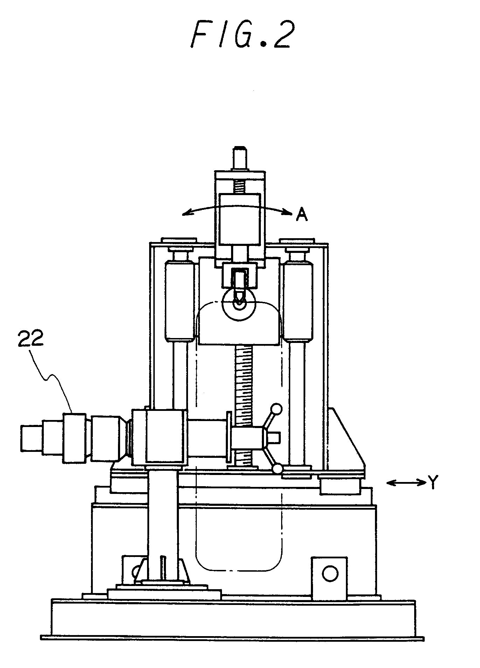

In Figures 1 and 2, numeral 1 indicates a base, numeral 2 indicates a tyre support unit, numeral 3 indicates a laterally movable carriage, numeral 4 indicates a pivotable arm, numeral 5 indicates a cutter support unit, numeral 6 indicates a cutter and numeral 7 indicates a tyre.

The tyre support unit 2 is mounted on the base 1 and has a tyre 7 on a tyre support shaft 21. The tyre 7 may be rotated by a reducation gear (not shown) and a motor 22. Numeral 23 is a tyre clamping handle.

The laterally movable carriage 3 is moved in the transverse direction parallel to the tyre support shaft 21 (i.e. the Y-axis direction) on a rail 31 parallel to the tyre support shaft 21 by means of a motor and a screw which are not shown. Numeral 32 is a vertically movable block which is supported on the laterally movable carriage 3 and is moved along guide shafts 33 in the vertical direction (i.e. in the Z-axis direction) by a threaded shaft rotated by a motor 34.

The laterally movable carriage 3 can be moved perpendicularly to the axis of the tyre support shaft 21, namely in the back and forth direction to the tyre 7 (i.e. the X-axis direction) on rails 36 on the base 1 along a guide bar 37 by means of a further motor and screw shaft (not shown). Thus the degree of freedom of movement can be increased when grooving a large size tyre.

A pivotable arm support shaft 38 extends from the side of the vertically movable block 32 and has an axis 39, which coincides with the cutting position P of the cutter 6. This allows movement of the cutter 6 along the Z-axis accompanied by the up and down movement of the cutter in the X-axis direction perpendicularly to the tyre support shaft 21, wherein the shaft is rotated around the axis 39 through a reduction gear (not shown) in the direction indicated by arrow A in Figure 2 by a motor (not shown) in the vertically movable block 32 so as to regulate the direction of the cutter 6 with the desired angle for the curved surface of the tyre tread. It is particularly desirable that the axis 39 should coincide with the tangential line of the plain tyre.

When the cutting position of the cutter 6 coincides with the axis 39 of the pivotable arm support shaft 38 as described above, since the cutting position coincides with the centre of movement, the amount of movement of the cutter tip needs to be calculated only by multiplying the rotated angle by the distance from the cutting position of the cutter 6 to the tip, and programmed control can be easily performed by a computer.

Hereinafter, the cutter support unit 5 will be described in more detail.

As shown in Figures 3 and 4, the cutter support unit 5 comprises a cutter support unit body 51, a rotatable shaft 52 extending from the bottom of the body 51, a cutter holder 53 connected with the lower end of the rotatable shaft 52, support pieces 54 attached perpendicularly to the side facing the pivotable arm 4 and a vertical movement mechanism 55. The vertical movement mechanism 55 comprises a U-shaped framework element 59 having a screw shaft 56 and parallel thereto a guide shaft 58 the outer portion of the centre of the U-shaped framework element 59. Two support pieces 54 are provided in Figure 3, but the number of the support pieces 54 is not limited to 2. If it is large enough to support the weight of the cutter support unit 5 and moves the cutter support unit 5 in the vertical direction with the desired accuracy, any support piece arrangement can be used. The support pieces 54 have a tapped hole and a through hole as shown in Figure 4. The tapped hole engages with the screw shaft 56, and the guide shaft 58 is inserted into the through hole. Since the screw shaft 56 is required to position the cutter support unit with high accuracy, for example 0.1mm, a ball screw is used. The screw shaft 56 is driven through a reduction gear (not shown) by means of a motor 57 controlled by a position adjustment program or by a digital switch provided separately which is connected to the upper end of the screw shaft. For the motor 57, a servo motor is used for high accuracy control. The screw shaft 56 may be rotated the desired number of times by the servo motor 57, and thereby the cutter support unit 5 can be independently moved by a predetermined distance and this adjusts the cutting or carving depth of the cutter 6 attached to the lower end portion of the cutter support unit 5. The cutting position of the cutter is moved in the up (down) direction according to the down (up) movement of the cutter 6, so that it always coincide with the axis of the shaft 35. Accordingly, the carving depth can be changed easily, and accurate tread patterns can be cut.

Furthermore, the rotatable shaft 52 can be turned by a reduction gear in the direction indicated by arrow B by a motor provided in the cutter support unit body 51 (see Figure 3), and thereby allows changes in the working direction of the cutter 6 held in the cutter holder 53, so that any desired tread patterns can be cut.

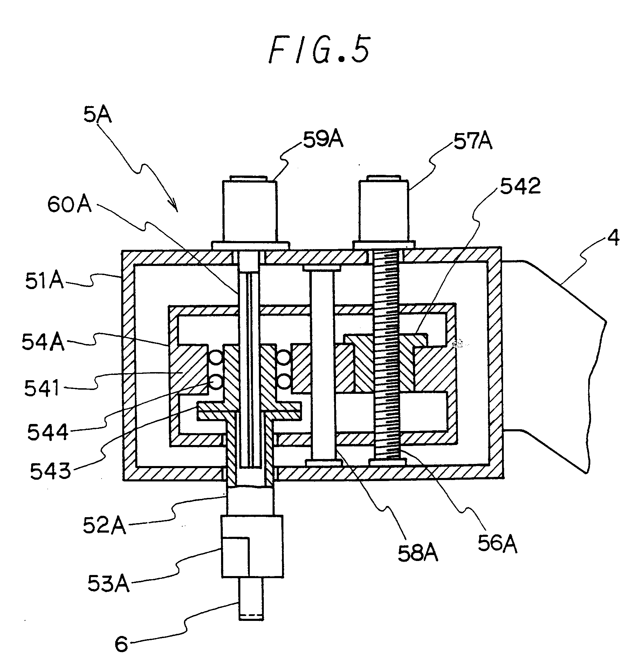

Figure 5 is a sectional view of the main part of another embodiment of the present invention. Here a cutter support unit 5A is mounted on the pivotable arm 4. The side of the cutter support unit body 51A is fixed to the free end portion of the pivotable arm 4. A box body 54A is mounted inside the body 51A. A support element 541 is provided near the centre of the internal portion of the box body 54A. A female screw element 542 and a rotating sleeve 543 are mounted on the supporting element 541. The female screw element 542 engages a screw shaft 56A which is rotatably supported by the bottom of the body 51A, projects through the box body 54A and extends to the top surface of the body 51A. The upper end of the screw shaft 56A is connected with a motor 57A having a reduction gear. The shape of the screw shaft 56A, the pitch and the motor 57A are selected in the same manner as in the aforementioned embodiment. The screw shaft 56A is rotated by the motor 57A, whereby the box body 54A is moved in the up (down) direction along the guide shaft 58A which is extended from the box body 54A and held in the body 51A. When the box body 54A moves in the up (down) direction, the cutter 6 held in the cutter holder 53A which is mounted on the lower end of the rotatable shaft 52A which is connected with the lower end of the rotatable sleeve 543 mounted on the box body 54A and is extended from the bottom of the box body 54A and body 51A. Furthermore, the rotatable sleeve 543 has a hole on which surface has a plurality of grooves longitudinally formed. The spline shaft 60A extending from a motor 59A with a reduction gear from the top surface of the body 51A is engaged with the grooves. When the spline shaft 60A is rotated by the motor 59A, the rotatable sleeve 543, mounted on the support element 541 by a bearing 544, is also rotated. The direction of the cutter 6 can be changed by rotating the rotatable sleeve 543.

As described above, in the present embodiment, the cutter 6 can be moved in the vertical direction so that the cutting position always coincides with the axis of the shaft 39, and thus the axis of shaft 39 can be kept coincident with the tangential line to the plain tyre. Accordingly, in the present embodiment, the tread patterns may have various depths of grooves and can be formed accurately by means of one cutter.

As described above, in the tyre grooving apparatus of the present invention, since the cutter support unit can be moved upwards and downwards independently, depth of the tread pattern grooves can be simply changed and moreover accurate tread patterns can be formed.

## Claims

1. A tyre grooving apparatus comprising a tyre support unit (2) including a tyre support shaft (21) adapted to rotatably support a tyre (7), a carriage (3) including means for moving said carriage parallel to the tyre support shaft (21), a block (32) mounted on said carriage (3) and means operatively connected to said block (32) for moving the block (32) in the vertical direction, a block shaft (38) extending from and rotatably supported by said block (32), a pivotable arm member pivotably supported at one end portion by said block shaft (38) and a cutter (6) supported by a cutter support unit (5) and disposed at the other end portion of the pivotable arm member (4), characterised by said cutter support unit (5) including means for independently moving said cutter support unit (5) in a direction perpendicular to the axis (39) of said block shaft (38) extending from said block (32) to position said cutter (6) coincident with the axis (39) of said block shaft (38).

## Patentansprüche

1. Ein Reifennutungsgerät mit einer Reifenhalteeinheit (2), die eine Reifenhaltewelle (21) einschließt, die ausgebildet ist, drehbar einen Reifen (7) zu halten, einer Tragevorrichtung (3), die Mittel zum Bewegen der Tragevorrichtung parallel zur Reifenhaltewelle (21) einschließt, einem Block (32), der auf der Tragevorrichtung (3) angebracht ist, und Mitteln, die wirksam mit dem Block (32) verbunden sind, um den Block (32) in die vertikale Richtung zu bewegen, einer Blockwelle (38), die sich von dem Block (32) erstreckt und drehbar durch diesen gehalten wird, einem schwenkbaren Armbauteil, das schwenkbar an einem Endteil durch die Blockwelle (38) gehalten wird, und einer Schneidevorrichtung (6), die durch eine Schneidevorrichtungshalteeinheit (5) gehalten wird und am anderen Endteil des schwenkbaren Armbauteils (4) angeordnet ist,
dadurch **gekennzeichnet**,
daß die Schneidevorrichtungshalteeinheit (5) Mittel einschließt, um die Schneidevorrichtungshalteeinheit (5) unabhängig in eine Richtung senkrecht zur Achse (39) der Blockwelle (38) zu bewegen, die sich von dem Block (32) erstreckt, um die Schneidevorrichtung (6) zusammenfallend mit der Achse (39) der Blockwelle (38) zu positionieren.

## Revendications

1. Appareil de formation de gorges dans un pneumatique, comprenant un ensemble (2) de support de pneumatique ayant un arbre (21) de support de pneumatique destiné à supporter un pneumatique (7) de manière qu'il puisse tourner, un chariot (3) comportant un dispositif de déplacement du chariot parallèlement à l'arbre (21) de support de pneumatique, un bloc (32) monté sur le chariot (3) et un dispositif raccordé pendant le fonctionnement audit bloc (32) afin qu'il déplace le bloc (32) en direction verticale, un arbre (38) de bloc dépassant du bloc (32) et supporté par celui-ci afin qu'il puisse tourner, un organe à bras pivotant supporté afin qu'il puisse tourner sur une première partie d'extrémité par l'arbre (38) du bloc, et un organe de coupe (6) supporté par un ensemble (5) de support d'organe de coupe et placé à l'autre partie d'extrémité de l'organe (4) à bras pivotant, caractérisé en ce que l'ensemble (5) de support d'organe de coupe comporte un dispositif de déplacement indépendant de l'ensemble (5) de support de l'organe de coupe en direction perpendiculaire à l'axe (39) de l'arbre (38) du bloc dépassant du bloc (32) afin que l'organe de coupe (6) puisse être placé en coïncidence avec l'axe (39) de l'arbre (38) du bloc.
